# EUROPÄISCHE PATENTSCHRIFT

(11) **EP 2 144 793 B1**
(45) Veröffentlichungstag und Bekanntmachung des Hinweises auf die Patenterteilung: **23.11.2011**
(21) Anmeldenummer: 08735056.7
(22) Anmeldetag: 07.04.2008
(51) Int. Cl.: B60S 1/52, B62D 25/24

(54) **ABDECKVORRICHTUNG FÜR EINE ÖFFNUNG EINER AUSSENWAND EINES FAHRZEUGS UND SCHEINWERFERREINIGUNGSANLAGE**
COVER DEVICE FOR AN OPENING OF AN OUTER WALL OF A VEHICLE AND HEADLIGHT CLEANING SYSTEM
DISPOSITIF DE RECOUVREMENT POUR UNE OUVERTURE D'UNE PAROI EXTERIEURE D'UN VEHICULE, ET SYSTEME DE LAVAGE DE PHARE

(30) Priorität: 26.04.2007 DE 102007019648
(43) Veröffentlichungstag der Anmeldung: 20.01.2010
(73) Patentinhaber: Rehau AG + Co, 95111 Rehau (DE)
(72) Erfinder: STROBEL, Karsten, 95111 Rehau (DE); FRIEDRICH, Markus, 95100 Selb (DE); HORN, James, 71063 Sindelfingen (DE); ALBRECHT, Carsten, 73760 Ostfildern (DE)
(86) Internationale Anmeldenummer: PCT/EP2008/002736
(87) Internationale Veröffentlichungsnummer: WO 2008/131844

(56) Entgegenhaltungen:
- EP-A- 0 950 588
- EP-A- 0 980 746
- DE-A1- 4 426 878
- DE-A1- 19 945 075
- DE-U1-202006 009 179
- FR-A- 2 710 016

## Beschreibung

Die Erfindung betrifft eine Abdeckvorrichtung für eine Öffnung einer Außenwand eines Fahrzeugs, mit einer die Öffnung verschließbaren Abdeckeinheit, welche eine Blendenplatte und damit verbundene Trägerarme umfasst und welche ausgehend vom verschließenden Zustand zum Freigeben der Öffnung um eine Schwenkachse in Richtung einer Außenseite des Fahrzeugs schwenkbar ist. Des Weiteren betrifft die Erfindung auch eine Scheinwerferreinigungsanlage mit einer derartigen Abdeckvorrichtung.

Aus der DE 196 37 033 C1 ist eine solche Abdeckvorrichtung sowie eine derartige Scheinwerferreinigungsanlage bekannt.

Die Abdeckvorrichtung umfasst eine Abdeckklappe, welche eine Blendenplatte, eine damit verbundene Tragplatte und an die Tragplatte angeformte Schwenkarme aufweist. An der Blendenplatte sind rückseitig überstehende Kunststoffnieten angeformt, über welche durch Warmstauchen eine feste Verbindung zu der Tragplatte herstellbar ist. Die Abdeckplatte ist aus mehreren separaten Komponenten ausgebildet, welche nachträglich zusammengefügt werden müssen. Die Blendenplatte besteht aus einem lackierfähigen Kunststoff und die Schwenkträger bzw. Schwenkarme sind als einstückige, biegesteife Formteile aus glasfaserverstärktem Kunststoffmaterial geformt.

Eine derartige Ausgestaltung weist neben einem aufwändigen Herstellungsverfahren für die einzelnen Komponenten einen zeit- und kostenintensiven Monatevorgang auf. Darüber hinaus können beim Zusammenfügen dieser einzelnen Komponenten Montagetoleranzen auftreten, welche sich nachteilig auf das Funktionsverhalten, insbesondere auf die Schwenkfunktionalität sowie das Verschließen der Öffnung an sich auswirken. Unerwünschte Toleranzen und Spaltmaße können auftreten.

DE-A-19945075 offenbart den Oberbegriff des Anspruchs 1.

Es ist Aufgabe der vorliegenden Erfindung, eine Abdeckvorrichtung sowie eine Scheinwerferreinigungsanlage zu schaffen, welche bei zumindest gleicher Funktionalität mit reduziertem Aufwand bereitgestellt werden kann.

Diese Aufgabe wird durch eine Abdeckvorrichtung, welche die Merkmale nach Anspruch 1 aufweist, und eine Scheinwerferreinigungsanlage, welche die Merkmale nach Anspruch 9 aufweist, gelöst.

Eine erfindungsgemäße Abdeckvorrichtung für eine Öffnung einer Außenwand eines Fahrzeugs, insbesondere einer Öffnung in einer Stoßfängerverkleidung zum Durchführen einer Sprüheinrichtung zur Reinigung eines Scheinwerfers des Kraftfahrzeugs, umfasst eine Abdeckeinheit, welche zum Verschließen dieser Öffnung ausgebildet ist. Die Abdeckeinheit umfasst zumindest eine Blendenplatte und damit verbundene Trägerarme. Ausgehend vom verschlossenen Zustand ist die Abdeckeinheit zum Freigeben der Öffnung um eine Schwenkachse in Richtung einer Außenseite und somit in Richtung einer Sichtseite des Fahrzeugs schwenkbar. Die Abdeckeinheit ist einstückig ausgebildet.

Durch diese Ausgestaltung kann eine einteilige Komponente bereitgestellt werden, welche mit reduziertem Aufwand hergestellt werden kann und dennoch zumindest gleiche Funktionalität zur Abdeckklappe im Stand der Technik aufweist.

Darüber hinaus können durch diese Ausgestaltung aufwändige Montagearbeiten, Qualitätsprüfungen und dergleichen minimiert werden. Ferner können unerwünschte Toleranzen, wie sie beim Zusammenbau der einzelnen Komponenten der Abdeckklappe im Stand der Technik auftreten können, durch die erfindungsgemäße Abdeckvorrichtung vermieden werden.

Bevorzugt sind die Trägerarme mit einer Trägerplatte unmittelbar verbunden, welche beabstandet zur Blendenplatte angeordnet ist und über einen zumindest bereichsweise umlaufenden Steg mit der Blendenplatte verbunden ist. Die im Wesentlichen parallel und beabstandet zueinander angeordnete Blendenplatte und Trägerplatte bilden mit dem zumindest bereichsweise umlaufenden Steg somit eine Hohlkörperstruktur. Dadurch kann eine Gewichtseinsparung erreicht werden und dennoch hohe mechanische Stabilität gewährleistet werden.

Bevorzugt ist die Wandstärke des zumindest bereichsweise umlaufenden Stegs zwischen der Blendenplatte und der Trägerplatte kleiner als die Dicke der Trägerplatte und/oder kleiner als die Dicke der Blendenplatte. Auch dadurch kann eine Materialeinsparung bei dennoch hoher mechanischer Stabilität erreicht werden.

Bevorzugt sind die flächenmäßigen Ausmaße der Trägerplatte kleiner als die flächenmäßigen Ausmaße der Blendenplatte und der zumindest bereichsweise umlaufende Steg verläuft zwischen der Blendenplatte und der Trägerplatte schräg angeordnet. Im Querschnitt stellt sich damit ein Aufbau dar, welcher von der frontseitigen Blendenplatte zu der dazu beabstandet und rückseitig angeordneten Trägerplatte quasi verjüngt ausgebildet ist.

Die einfallstellenfreie Optik der Außenseite der Blendenplatte wird durch eine derartige Anbindung gemäß einem T-Stoß-Konzept erreicht, indem dazu insbesondere unterschiedliche Wandstärken ausgebildet werden. In Bereichen, in denen Wände auf Flächen konstruiert werden (T-Stoß) können dadurch Einfallstellen der Außenseite der Fläche verhindert werden.

Bevorzugt ist vorgesehen, dass der Steg kontinuierlich über die Trägerplatte in die Trägerarme übergeht und die Wandstärke des Stegs mit kleiner werdendem Abstand zu einem Trägerarm zunimmt, insbesondere kontinuierlich zunimmt.

Ganz allgemein ist somit die Deckfläche des Aufbaus der Abdeckeinheit durch unterschiedliche Materialstärken charakterisiert, welche in Richtung der Schwenkarme bzw. Trägerarme zunehmend ist. Neben einer Materialeinsparung mit dennoch ausreichender mechanischer Stabilität kann dadurch auch ein optisch einwandfreier und hochwertiger Eindruck vermittelt werden.

Je nach technischem Konzept können bei dem hohlen Aufbau zwischen der Blendenplatte und der Trägerplatte Wandflächen in unterschiedlicher Stärke an den Touchierflächen der eingesetzten Schieber entstehen oder aber auch keine derartigen Wandflächen vorhanden sein.

Bevorzugt ist ein Trägerarm zumindest bereichsweise als Hohlprofil, insbesondere als offenes, insbesondere zur Außenseite hin offenes Hohlprofil, ausgebildet. In dem Hohlprofil sind Verstrebungen ausgebildet. Auch diese konstruktive Ausgestaltung ermöglicht eine Gewichtreduzierung bei dennoch hoher mechanischer Stabilität. Die Verwindungssteifigkeit kann dadurch sehr hoch gehalten werden.

Bevorzugt sind die parallel zueinander angeordneten Trägerarme über die Anbindung an die Trägerplatte zueinander fixiert. Die Trägerarme sind im Wesentlichen parallel zueinander angeordnet. Im Bereich der der Trägerplatte abgewandten Enden sind die Trägerarme durch einen Quersteg miteinander verbunden. Die Trägerarme können durch Aufspreizen im Bereich dieser Enden an den dort ausgebildeten Lagerbohrungen auf Achszapfen verschiebefest aufgerastet werden. Zwischen dem Quersteg und einem Ausleger, welcher an einem Montagerahmen angeordnet sein kann, ist eine Schenkelfeder angeordnet, durch welche die Abdeckeinheit vorgespannt werden kann.

Bevorzugt ist die einstückige Abdeckeinheit aus PC und/oder PBT ausgebildet. Durch diese Ausgestaltung kann die Abdeckeinheit als einfaches Spritzgussteil in einem einzigen gemeinsamen Herstellungsprozess gefertigt werden. Für die gesamte Abdeckeinheit ist somit dann nur noch ein Spritzgusswerkzeug erforderlich.

Bevorzugt ist die Abdeckeinheit an einem formschlüssig in die Öffnung einsetzbaren Montagerahmen angeordnet und im geschlossenen Zustand ist die von dem Montagerahmen umrandete Öffnung außenseitig und somit sichtseitig überdeckt.

Ein weiterer Aspekt der Erfindung betrifft eine Scheinwerferreinigungsanlage für ein Fahrzeug, mit einer durch eine Öffnung in einer Außenwand, insbesondere einer Stoßfängerverkleidung, aus einer Ruhestellung in eine Arbeitsstellung ausfahrbaren Sprüheinrichtung und einer Abdeckvorrichtung gemäß der Erfindung oder einer vorteilhaften Ausgestaltung davon.

Der Öffnungsmechanismus der Abdeckvorrichtung wird über die Sprüheinrichtung, insbesondere die Sprühdüse, realisiert. Die Sprüheinrichtung kann als Teleskoparm ausgebildet sein und das Ausfahren in die Arbeitsstellung kann durch eine Druckbeaufschlagung erfolgen. Durch die Hubbewegung der Sprüheinrichtung bzw. des Sprühdüsenkopfs wird die Trägerplatte und somit die gesamte Abdeckeinheit entgegen der Rückstellkraft der Schenkelfeder bzw. Rückholfeder aufgestoßen. Zur Kollisionsvermeidung der Sprüheinrichtung mit der Blendenplatte der Abdeckeinheit und zur Verhinderung von Beschädigungen der lackierten Fläche der Blendenplatte infolge einer Kollision besitzt die Trägerplatte eine Abstandsfunktion zwischen der Sprüheinrichtung, insbesondere dem Sprühdüsenkopf, und der Blendenplatte der Abdeckeinheit.

Ein Ausführungsbeispiel der Erfindung wird nachfolgend anhand schematischer Zeichnungen näher erläutert. Es zeigen:
- Fig. 1: eine teilweise geschnittene Seitenansicht einer an einer Stoßfängerverkleidung montierten erfindungsgemäßen Abdeckvorrichtung in der Freigabestellung einer erfindungsgemäßen Scheinwerferreinigungsanlage;
- Fig. 2: eine erste perspektivische Darstellung einer Abdeckeinheit einer erfindungsgemäßen Abdeckvorrichtung;
- Fig. 3: eine weitere perspektivische Darstellung einer Abdeckeinheit einer erfindungsgemäßen Abdeckvorrichtung; und
- Fig. 4: eine schematische Schnittdarstellung einer Abdeckeinheit gemäß Fig. 2 und 3.

In den Figuren werden gleiche oder funktionsgleiche Elemente mit den gleichen Bezugszeichen versehen.

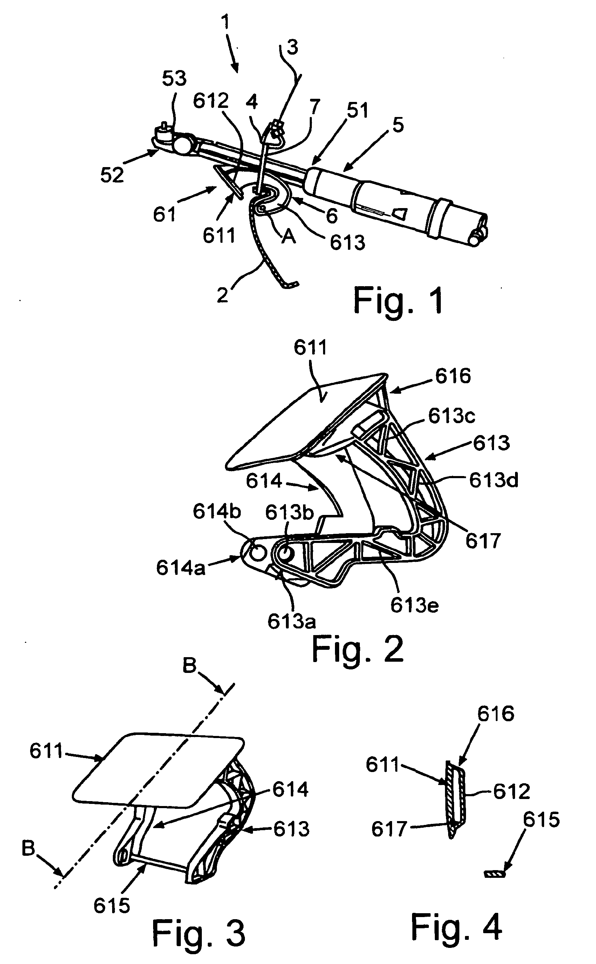

In der in Fig. 1 gezeigten Darstellung ist eine Scheinwerferreinigungsanlage 1 für ein Fahrzeug gezeigt. Das Fahrzeug umfasst eine Stoßfängerverkleidung 2 und einen Scheinwerfer mit einer Streulichtscheibe 3. Die Streulichtscheibe 3 grenzt von oben an den Stoßfänger bzw. die Stoßfängerverkleidung 2 an. In der Stoßfängerverkleidung 2 ist eine Öffnung 4 ausgebildet.

Die Scheinwerferreinigungsanlage 1 umfasst eine Sprüheinrichtung 5, welche einen Teleskoparm 51 aufweist. Dieser ist durch eine Druckbeaufschlagung in seiner Längsrichtung hin und her bewegbar. An einem vorderen Ende 52 ist eine Sprühdüse 53 angeordnet.

In Fig. 1 ist die Scheinwerferreinigungsanlage 1 in einem aktiven Zustand gezeigt, wobei dazu die Sprüheinrichtung 5 in einer Arbeitsstellung gezeigt ist. Dies ist dadurch gekennzeichnet, dass sich die Sprüheinrichtung 5 durch die Öffnung 4 nach außen hin erstreckt und Reinigungsflüssigkeit über die Sprühdüse 53 auf die Außenseite der Streulichtscheibe 3 gesprüht werden kann.

In einer Ruhestellung wird die Sprüheinrichtung 5 wieder zurückgefahren, indem der Teleskoparm 51 eingefahren wird und sich die Sprühdüse 53 innerhalb des Fahrzeugs und somit hinter der dann verschlossenen Öffnung 4 befindet.

Im Hinblick auf Funktionalität und grundlegende Ausgestaltung der Scheinwerferreinigungsanlage 1 sei auf die DE 196 37 033 C1 verwiesen.

Die Scheinwerferreinigungsanlage 1 umfasst eine Abdeckvorrichtung 6, welche zur Abdeckung der Öffnung 4 ausgebildet ist. Die Abdeckvorrichtung 6 umfasst eine Abdeckeinheit 61. Die Abdeckeinheit 61 ist als einstückiges Spritzgussteil ausgebildet und insbesondere aus PC/PBT hergestellt.

Die Abdeckeinheit 61 umfasst eine Blendenplatte 611, eine im Wesentlichen parallel und beabstandet dazu angeordnete Trägerplatte 612 sowie zwei im Wesentlichen parallel zueinander angeordnete und mit der Trägerplatte 612 unmittelbar verbundene Trägerarme 613 und 614 (Fig. 2, 3).

Die Trägerarme 613 und 614 sind bogenförmig gekrümmt und in erster Näherung U-förmig ausgebildet. An den der Blendenplatte 611 und der Trägerplatte 612 abgewandten Enden sind die Trägerarme 613 und 614 über eine gemeinsame, senkrecht zur Figurenebene verlaufende Schwenkachse A verschwenkbar. Wie aus der Darstellung in Fig. 1 zu erkennen ist, ist diese Schwenkachse A hinter der Stoßfängerverkleidung 2 angeordnet.

An den der Blendenplatte 611 und der Trägerplatte 612 abgewandten Enden 613a und 614a (Fig. 2) sind jeweils durchgängige Löcher ausgebildet, welche Lagerbohrungen bilden. Durch Aufspreizen der Trägerarme 613 und 614 können diese im Bereich dieser Löcher 613b und 614b auf nicht dargestellte Achszapfen verschiebefest aufgerastet werden.

Die Trägerarme 613 und 614 sind im Bereich dieser Enden 613a und 614a durch einen Quersteg 615 (Fig. 3) verbunden. Zwischen diesem Quersteg 615 und einem nicht dargestellten Ausleger, welcher auf einem Montagerahmen 7 angeordnet ist, kann eine Rückholfeder (nicht dargestellt) angeordnet sein und dadurch die Abdeckeinheit 61 vorgespannt sein.

In Fig. 1 ist eine Stellung gezeigt, bei der die Abdeckeinheit 61 durch den Teleskoparm 51 über die Schwenkachse A nach vorne geschoben ist und somit die Öffnung 4 freigegeben ist. Das Verschwenken der Abdeckeinheit 61 erfolgt dabei entgegen der Federkraft der Rückholfeder.

Beim Zurückführen der Sprüheinrichtung 5 in die Ruhestellung wird somit dann auch beim Einfahren des Teleskoparms 51 automatisch über die Federkraft der Rückholfeder die Abdeckeinheit 61 zurückgezogen und somit die Öffnung 4 vollständig überdeckend geschlossen.

Die Abdeckeinheit 61 ist an dem formschlüssig in die Öffnung 4 einsetzbaren Montagerahmen 7 angeordnet und im geschlossenen Zustand ist die von dem Montagerahmen 7 umrandete Öffnung 4 außenseitig und somit auf der Sichtseite des Fahrzeugs überdeckt.

Im Hinblick auf die Darstellung der Abdeckeinheit 61 in Fig. 1 sei darauf hingewiesen, dass diese dort in ihrer Formgebung und Ausgestaltung nur sehr schematisch gezeigt ist. Die detailliertere Ausgestaltung sei nachfolgend anhand der Fig. 2 bis 4 erläutert.

In Fig. 2 ist eine erste perspektivische Darstellung gezeigt, bei der die viereckige Blendenplatte 611 zu erkennen ist. Die Blendenplatte 611 weist flächenmäßige Ausmaße auf, welche größer sind als die flächenmäßigen Ausmaße der dahinter und beabstandet dazu angeordneten Trägerplatte 612. Die Blendenplatte 611 ist mit der Trägerplatte 612 durch einen zumindest bereichsweise umlaufenden Steg 616 und 617 verbunden.

Wie in der Schnittdarstellung gemäß Fig. 4 entlang der Schnittlinie BB in der Fig. 3 zu erkennen ist, weisen die Stege 616 und 617 eine Wandstärke auf, welche kleiner ist als die Wandstärke bzw. die Dicke der Blendenplatte 611 und auch kleiner ist als die Dicke der Trägerplatte 612. Darüber hinaus ist in der Schnittdarstellung gemäß Fig. 4 zu erkennen, dass die Stege 616 und 617 in der Schnittdarstellung schräg angeordnet sind und somit der Aufbau von der Blendenplatte 611 in Richtung der Trägerplatte 612 verjüngt ausgebildet ist.

In Fig. 2 ist des Weiteren zu erkennen, dass der Steg 616 bzw. 617 kontinuierlich über die Trägerplatte 612 in die Trägerarme 613 bzw. 614 übergeht. Die Wandstärke des Stegs 616 bzw. 617 wird mit kleiner werdendem Abstand ausgehend von der Blendenplatte 611 hin zur Trägerplatte 612 bzw. zu den Trägerarmen 613 und 614 größer.

Die Trägerarme 613 und 614 sind als nach außen hin offene Hohlprofile ausgebildet, welche jeweils eine Mehrzahl von Verstrebungen in dem Hohlprofil aufweisen. Die beispielhaft näher bezeichneten Verstrebungen 613c, 613d und 613e verlaufen schräg zwischen den das Hohlprofil und den Trägerarm 613 begrenzenden Außenwänden.

In analoger Weise ist der Trägerarm 614 ausgebildet.

Wie in Fig. 2 des Weiteren gezeigt ist, sind die einander zugewandten Seitenwände der Trägerarme 613 und 614 vollflächig durch eine Wand geschlossen.

In der Schnittdarstellung gemäß Fig. 4 ist der hohle Aufbau zwischen der Blendenplatte 611 und der Trägerplatte 612 zu erkennen. Die Trägerplatte 612 ist auch zum Schutz der Blendenplatte 611 vorgesehen.

## Patentansprüche

1. Abdeckvorrichtung für eine Öffnung (4) einer Außenwand (2) eines Fahrzeugs, mit einer die Öffnung (4) verschließbaren Abdeckeinheit (61), welche eine Blendenplatte (611) und damit verbundene Trägerarme (613, 614) umfasst und ausgehend vom verschließenden Zustand zum Freigeben der Öffnung (4) um eine Schwenkachse (A) in Richtung einer Außenseite des Fahrzeugs schwenkbar ist, wobei die Trägerarme (613, 614) mit einer Trägerplatte (612) unmittelbar verbunden sind, welche beabstandet zur Blendenplatte (611) angeordnet ist,
**dadurch gekennzeichnet,**
**dass** die Abdeckeinheit (61) als einstückiges Spritzgussteil ausgebildet ist und die Trägerplatte (612) über einen zumindest bereichsweise umlaufenden Steg (616, 617) mit der Blendenplatte (611) verbunden ist, wobei die im Wesentlichen parallel und beabstandet zueinander angeordnete Blendenplatte (611) und Trägerplatte (612) mit dem zumindest bereichsweise umlaufenden Steg (616, 617) eine Hohlkörperstruktur bilden.

2. Abdeckvorrichtung nach Anspruch 1,
**dadurch gekennzeichnet,**
**dass** die Wandstärke des Stegs (616, 617) kleiner ist als die Dicke der Trägerplatte (612) und/oder kleiner ist als die Dicke der Blendenplatte (611).

3. Abdeckvorrichtung nach Anspruch 1,
**dadurch gekennzeichnet,**
**dass** die flächenmäßigen Ausmaße der Trägerplatte (612) kleiner sind als die der Blendenplatte (611) und der zumindest bereichsweise umlaufende Steg (616, 617) zwischen der Blendenplatte (611) und der Trägerplatte (612) schräg angeordnet ist.

4. Abdeckvorrichtung nach Anspruch 1,
**dadurch gekennzeichnet,**
**dass** der Steg (616, 617) kontinuierlich verjüngt über die Trägerplatte (612) in die Trägerarme (613, 614) übergeht und die Wandstärke des Stegs (616, 617) mit kleiner werdendem Abstand zu einem Trägerarm (613, 614) zunimmt, insbesondere kontinuierlich zunimmt.

5. Abdeckvorrichtung nach Anspruch 1,
**dadurch gekennzeichnet,**
**dass** ein Trägerarm (613, 614) zumindest bereichsweise als Hohlprofil ausgebildet ist, in dem Verstrebungen (613c, 613d, 613e) ausgebildet sind.

6. Abdeckvorrichtung nach Anspruch 1,
**dadurch gekennzeichnet,**
**dass** die Abdeckeinheit (61) aus PC und/oder PBT ausgebildet ist.

7. Abdeckvorrichtung nach Anspruch 1,
**dadurch gekennzeichnet,**
**dass** die Abdeckeinheit (61) an einem formschlüssig in die Öffnung (4) einsetzbaren Montagerahmen (7) angeordnet ist und im geschlossenen Zustand die von dem Montagerahmen (7) umrandete Öffnung (4) außenseitig überdeckt.

8. Scheinwerferreinigungsanlage für ein Fahrzeug, mit einer durch eine Öffnung (4) in einer Außenwand, insbesondere einer Stoßfängerverkleidung (2), aus einer Ruhestellung in eine Arbeitsstellung ausfahrbaren Sprüheinrichtung (5), und einer Abdeckvorrichtung (6) nach einem der vorhergehenden Ansprüche.

## Claims

1. Cover device for an opening (4) in an outer wall (2) of a vehicle, with a cover unit (61) which can close the opening (4), comprises a cover plate (611) and support arms (613, 614) connected thereto, and can be pivoted from the closing state about a pivot axis (A) in the direction of an outer side of the vehicle in order to open up the opening (4), wherein the support arms (613, 614) are directly connected to a support plate (612) which is arranged at a distance from the cover plate (611), **characterized in that** the cover unit (61) is designed as a single piece injection moulded part, and the support plate (612) is connected via an at least partially encircling web (616, 617) to the cover plate (611), and the cover plate (611) and support plate (612), which are arranged substantially parallel to and spaced apart from each other, form a hollow body structure with the at least partially encircling web (616, 617).

2. Cover device according to Claim 1, **characterized in that** the wall thickness of the web (616, 617) is smaller than the thickness of the support plate (612) and/or is smaller than the thickness of the cover plate (611).

3. Cover device according to Claim 1, **characterized in that** the area dimensions of the support plate (612) are smaller than those of the cover plate (611), and the at least partially encircling web (616, 617) between the cover plate (611) and the support plate (612) is arranged obliquely.

4. Cover device according to Claim 1, **characterized in that** the web (616, 617) merges in a continuously tapered manner via the support plate (612) into the support arms (613, 614), and the wall thickness of the web (616, 617) increases, in particular increases continuously, as the distance from a support arm (613, 614) becomes smaller.

5. Cover device according to Claim 1, **characterized in that** a support arm (613, 614) is at least partially designed as a hollow profile in which diagonal members (613c, 613d, 613e) are formed.

6. Cover device according to Claim 1, **characterized in that** the cover unit (61) is formed from PC and/or PBT.

7. Cover device according to Claim 1, **characterized in that** the cover unit (61) is arranged on a mounting frame (7) which can be inserted in a form fitting manner into the opening (4) and, in the closed state, covers the opening (4), which is bounded by the mounting frame (7), on the outside.

8. Headlight cleaning system for a vehicle, with a spraying device (5) which can be extended from an inoperative position into a working position through an opening (4) in an outer wall, in particular in a bumper cladding (2), and with a cover device (6) according to one of the preceding claims.

## Revendications

1. Dispositif de recouvrement pour une ouverture (4) d'une paroi extérieure (2) d'un véhicule, avec une unité de recouvrement (61) pouvant fermer l'ouverture (4), ladite unité comprenant une plaque d'obturation (611) et des bras de support (613, 614) y étant reliés et pouvant pivoter autour d'un axe de pivotement (A) en direction d'un côté extérieur du véhicule pour passer de l'état de fermeture à l'état de libération de l'ouverture (4), les bras de support (613, 614) étant directement reliés à une plaque de support (612) disposée à une certaine distance de la plaque d'obturation (611), **caractérisé en ce que** l'unité de recouvrement (61) prend la forme d'une pièce moulée par injection réalisée d'un seul tenant et la plaque de support (612) est reliée à la plaque d'obturation (611) par le biais d'un étai (616, 617) l'entourant au moins en partie, la plaque d'obturation (611) et la plaque de support (612) disposées pour l'essentiel parallèlement et à une certaine distance l'une de l'autre formant une structure de corps creux avec l'au moins un étai (616, 617) l'entourant au moins en partie.

2. Dispositif de recouvrement selon la revendication 1, **caractérisé en ce que** l'épaisseur de la paroi de l'étai (616, 617) est inférieure à l'épaisseur de la plaque de support (612) et/ou inférieure à l'épaisseur de la plaque d'obturation (611).

3. Dispositif de recouvrement selon la revendication 1, **caractérisé en ce que** les dimensions en surface de la plaque de support (612) sont inférieures à celles de la plaque d'obturation (611) et **en ce que** l'au moins un étai (616, 617) l'entourant au moins en partie est disposé de façon oblique entre la plaque d'obturation (611) et la plaque de support (612).

4. Dispositif de recouvrement selon la revendication 1, **caractérisé en ce que** l'étai (616, 617) se transforme en continu en bras de support (613, 614) sur l'ensemble de la plaque de support (612) et **en ce que** l'épaisseur de paroi de l'étai (616, 617) augmente à mesure que l'écartement d'avec le bras de support (613, 614) augmente, notamment augmente en continu.

5. Dispositif de recouvrement selon la revendication 1, **caractérisé en ce qu'**un bras de support (613, 614) est réalisé au moins en partie sous la forme d'un profilé creux par le bais de la réalisation de contre-fiches (613c, 613d, 613e).

6. Dispositif de recouvrement selon la revendication 1, **caractérisé en ce que** l'unité de recouvrement (61) est réalisée en PC et/ou en PBT.

7. Dispositif de recouvrement selon la revendication 1, **caractérisé en ce que** l'unité de recouvrement (61) est disposée au niveau d'un cadre de montage (7) pouvant être inséré par complémentarité de formes dans l'ouverture (4) et **en ce que** l'ouverture (4) bordée, à l'état fermé, par le cadre de montage (7) déborde sur le côté extérieur.

8. Installation de nettoyage de phare pour un véhicule, équipée d'un dispositif de pulvérisation (5) pouvant sortir, à travers une ouverture (4), dans une paroi extérieure, notamment un revêtement de pare-chocs (2), en passant d'une position de repos dans une position de travail, ainsi que d'un dispositif de recouvrement (6) selon l'une quelconque des revendications précédentes.
